# EUROPÄISCHE PATENTSCHRIFT

(11) **EP 0 585 784 B1**
(45) Veröffentlichungstag und Bekanntmachung des Hinweises auf die Patenterteilung: **26.04.1995**
(21) Anmeldenummer: 93113517.2
(22) Anmeldetag: 24.08.1993
(51) Int. Cl.: G01B 5/00

(54) **Mehrkoordinaten-Tastmessgerät**
Multiple coordinate feeler measuring device
Palpeur de mesure de coordonnées multiples

(30) Priorität: 24.08.1992 DE 4228018
(43) Veröffentlichungstag der Anmeldung: 09.03.1994
(73) Patentinhaber: HAFF & SCHNEIDER GmbH & Co. OHG, D-87459 Pfronten (DE)
(72) Erfinder: Mörz, Fridolin, D-87787 Wolfertschwenden (DE)
(74) Vertreter: Viering, Jentschura & Partner

(56) Entgegenhaltungen:
- EP-A- 0 346 562
- WO-A-91/10887
- WO-A-91/14149
- FR-A- 2 375 580
- US-A- 3 250 012

## Beschreibung

Die Erfindung betrifft ein Mehrkoordinaten-Tastmeßgerät, mit einem Gehäuse, über das ein Tastarm mit einer Tastkugel am freien Ende axial hinaussteht, der in dem Gehäuse axial verschiebbar und an diesem über ein Kugelgelenk aus einem in einer Gehäuseplatte ausgebildeten Ringsitz und einem in diesem drehbar abgestützten, an dem Tastarm ausgebildeten kugeligen Gelenkkopf bis zu einem vorbestimmten Maximalwinkel allseits schwenkbar gelagert ist und auf dem in dem Gehäuse ein gegen die Kraft einer Rückstellfeder verschiebbarer Schieber abgestützt ist, der mit einer die Verschiebegröße des Schiebers anzeigenden Anzeigeeinrichtung gekoppelt ist, wobei der Gelenkkopf aus dem Ringsitz durch die Axialverschiebung des Tastarms aushebbar und als Kugelabschnitt ausgebildet ist, auf dem ein Kippteller ausgebildet ist, der mit seinem kreisförmigen Umfangsrand an dem Schieber kippbar axial abgestützt ist, der einen im Durchmesser mit dem Kippteller übereinstimmenden Stützteller aufweist, an dem der Kippteller mit seinem axialen Umfangsrand in einer Ebene anliegt, die im Bereich des Krümmungsmittelpunktes des Gelenkkopfes verläuft.

Ein derartiges Mehrkoordinaten-Tastmeßgerät dient insbesondere zur Nullpunktseinstellung einer numerisch gesteuerten Fräsmaschine in Bezug auf das zu bearbeitende Werkstück. Hierzu wird das Tastmeßgerät in die Maschinenspindel eingespannt und mit der Tastkugel bis zu einer Bezugsantastkante des Werkstücks verfahren. Sobald die Anzeigeeinrichtung sich in der Nullstellung befindet, ist der Nullpunkt der betreffenden Koordinate erreicht, auf den dann die Steuerung der Fräsmaschine eingestellt werden kann.

Bei einem bekannten Tastmeßgerät der eingangs erwähnten Art (US-A-3 250 012), das zum Abtasten von Fertigungstoleranzen von auf der Werkzeugmaschine bearbeiteten Werkstücken dient, ist der Kippteller als obere Sehnenfläche eines den Gelenkkopf bildenden Halbkugelabschnitts ausgebildet, dessen Durchmesser dem Innendurchmesser des Gehäuses entspricht. Der Schieber ist mit seiner Umfangsfläche am Gehäuse geführt und ist topfförmig ausgebildet. Von der Unterseite des Schieberbodens wird der Stützteller gebildet und auf der Oberseite des Schieberbodens ist ein Signalwandler mit seinem Abtaststift abgestützt.

Durch die Erfindung wird das Problem gelöst, wie ein Mehrkoordinaten-Tastmeßgerät der eingangs erwähnten Art derart ausgebildet werden kann, daß bei einfachem Aufbau eine zweckgerechte Präzision und Funktionalität auch bei großen Meßwegen in axialer und in radialer Richtung erreicht werden.

Dies wird erfindungsgemäß dadurch erreicht, daß der Kippteller über den Gelenkkopf allseits radial hinausragt, daß der Stützteller als Kreisscheibe ausgebildet ist, die in einer zylindrischen unteren Gehäusekammer, deren Durchmesser mit dem der Kreisscheibe übereinstimmt, an einem im Durchmesser kleineren Schieberschaft sitzt, der durch die angrenzende Begrenzungswand der unteren Gehäusekammer und eine darüber befindliche obere Gehäusekammer bis in deren obere Begrenzungswand verläuft und in den Begrenzungswänden gleitend geführt ist.

Bei dem erfindungsgemäßen Mehrkomponenten-Tastmeßgerät ist der Tastarm über den Kippteller unmittelbar an dem Schieber abgestützt, wodurch Zwischengelenke in der Abstützkette entfallen und eine direkte Wegübertragung von der Tastkugel auf den Schieber erreicht wird. Durch das radiale Vorstehen des Kipptellers über den Gelenkkopf und damit über den Ringsitz für den Gelenkkopf entsteht außerdem in den Schwenkstellungen des Tastarms und daher in den Kippstellungen des Kipptellers aufgrund der auf den Kippteller exzentrisch einwirkenden Kraft der Rückstellfeder des Meßschiebers ein Gegenmoment zu dem auf den Gelenkkopf aus dem Tastdruck und dem Hebelarm des Tastarms einwirkenden Drehmoment. Dies hat zur Folge, daß der Kugelmittelpunkt des Gelenkkopfes und daher die aktuelle Schwenkachse des Tastarms auch bei größeren Schwenkwinkeln nicht auswandert und somit der Gelenkkopf in seiner Lage in dem Ringsitz stabilisiert ist. Weiter ermöglicht die Erfindung eine verhältnismäßig schwache Auslegung der Rückstellfeder des Schiebers, so daß die Leichtgängigkeit des Tastmeßgerätes ohne Präzisionsbeeinträchtigung sichergestellt ist.

Da weiter die Kipptellerebene im Bereich des Krümmungsmittelpunktes des Gelenkkopfes verläuft, können das Spiel zwischen dem Kippteller und der ihn umgebenden zylindrischen Gehäusewand wie auch radiale Verschiebungsgrößen des Berührungspunktes zwischen dem Schieber und dem Kippteller bei dessen Kippbewegungen möglichst klein gehalten werden. Außerdem wandert dadurch der Durchmesser des Kipptellers beim Verschwenken des Tastarms nicht aus dem Durchmesser des zylindrischen Gehäuses heraus, wodurch der Durchmesser des Kipptellers bis auf ein kleines Führungsspiel dem Innendurchmesser des Gehäuses entsprechen kann und der Gelenkkopf an dem Umfangsrand des Kipptellers bei den Axialbewegungen des Tastarms von der Gehäusewandung geführt wird.

Es ist zwar ein Tastmeßgerät an sich bekannt (WO-A-91 10 887), bei dem am Gelenkkopf ein Kippteller vorgesehen ist, der über den Gelenkkopf allseits radial hinausragt. Dieser wirkt jedoch nicht mit einem Schieber zusammen, sondern mit einem zweiten Kippteller, der an einer den ersten Kippteller umgebenden Ringschulter seinerseits kippbar abgestützt ist.

Das Führungsspiel für den Kippteller kann weiter verkleinert werden, indem der Umfangsrand des Kipptellers konvex abgerundet oder keilförmig gestaltet wird, so daß keine Kollisionsgefahr zwischen der oberen und der unteren Umfangskante einerseits und der Gehäusewandung andererseits beim Verkippen des Kipptellers auch bei wesentlicher Dicke des Kipptellers besteht.

Damit der freie Schwenkwinkel des Tastarms auch bei verhältnismäßig großem Überstand des Kipptellers über den Gelenkkopf und dennoch kleiner Baugröße des Gehäuses nicht zu klein wird, kann der über den Gelenkkopf radial hinaustehende Teil des Kipptellers an der dem Ringsitz zugewandten Seite kegelförmig sein, wobei die gedachte Kegelspitze an der dem Schieber abgewandten Seite des Kipptellers liegt.

An dem Schieberschaft kann ein Kopplungselement zur Übertragung der Verschiebegröße des Schiebers an die Anzeigeeinrichtung des Tastmeßgerätes vorgesehen sein.

Die Anzeigeeinrichtung kann im übrigen eine mit dem Schieber mechanisch gekoppelte Zeiger-Meßuhr sein. Es ist jedoch auch möglich, eine beispielsweise optoelektronisch oder induktiv oder dergleichen gekoppelte Anzeigeeinrichtung vorzusehen.

Zusätzlich zu der an dem Meßschieber angreifenden Rückstellfeder kann zwischen dem Schieber und dem Gelenkkopf eine Zugfeder eingespannt sein, um die Rückstellungen des Tastarms aus dessen Schwenkstellungen in die Axialposition zu begünstigen.

Eine genaue Ausrichtung des Mittelpunktes der Tastkugel auf die Spindelachse der Fräsmaschine läßt sich bei bekannten Mehrkomponenten-Tastmeßgeräten der vorliegenden Art dadurch erreichen, daß die Achse des Meßschiebers im Abstand von dem Gelenkkopf mit Hilfe von vier Justierschrauben radial verstellt wird. In einer Ausgestaltung der Erfindung ist es jedoch auch möglich, die Justierung dadurch zu erreichen, daß die den Ringsitz aufnehmende Gehäuseplatte über einen Druckring und eine Tellerfeder mit dem Gehäuse axial verspannt ist und in dem Druckring mit Umfangsspiel gehalten ist, und daß zwischen dem Druckring und der Gehäuseplatte eine äußere axiale Ringnut für den Eingriff eines Hebelwerkzeugs ausgebildet ist. Mit Hilfe eines geeigneten Werkzeugs, wie eines Schlitzschraubendrehers, ist es daher möglich, die Exzentrizität der Tastkugel gegenüber der Spindelachse dadurch zu beseitigen, daß der Gelenkkopf mittels der den Ringsitz aufnehmenden Gehäuseplatte entsprechend weit radial ausgehebelt wird. Hierzu kann der Radialschlag der Tastkugel mit Hilfe einer an diese angesetzten Meßuhr beim Verdrehen der Spindel der Fräsmaschine mit dem in diese eingespannten Tastmeßgerät festgestellt werden und kann dann die Gehäuseplatte in der entsprechenden Radialrichtung relativ zu dem Druckring und daher dem Gehäuse bis zum Rundlauf verstellt werden. Für eine solche Justierung ist es nicht erforderlich, den Druckring zu lösen, weil der Reibsitz unter der Kraft der Tellerfeder eine lagesichere Stellung der Gehäuseplatte im Normalgebrauch des Tastmeßgerätes bietet. Wenngleich diese Justiermöglichkeit besonders durch die erfindungsgemäße Gestaltung des Tastmeßgerätes gegeben ist, kann sie auch bei andersartigen Mehrkomponenten-Tastmeßgeräten der vorliegenden Art anwendbar sein.

Wenngleich ferner der Tastarm mit dem Gelenkkopf einstückig hergestellt sein kann, wird es bevorzugt, ihn auswechselbar zu machen, damit Tastarme mit unterschiedlichen Längen mit demselben Tastmeßgerät verwendet werden können. Daher kann an dem Gelenkkopf an der dem Gehäuse abgewandten Seite ein Futter, vorzugsweise ein Konusfutter ausgebildet sein, in welchem der Tastarm über einen Schaft, entsprechend vorzugsweise einen Konusschaft, auswechselbar festgelegt ist. Ein solcher Konussitz wird insbesondere bevorzugt, weil er eine hohe Wechselgenauigkeit aufweist und daher ggf. eine Rundlaufjustierung entbehrlich macht. Außerdem werden durch einen Konussitz "lose" Tasteinsätze verhindert. Wenngleich auch dieser erfindungsgemäße Vorschlag allgemein bei Mehrkoordinaten-Tastmeßgeräten der vorliegenden Art angewendet werden kann, wird die auswechselbare Verwendung auch längerer Tastarme durch deren erfindungsgemäße Lagerung besonders begünstigt, weil die oben geschilderte Kompensation des auf den Gelenkkopf in den Schwenkstellungen des Tastarms exzentrisch einwirkenden Drehmomentes, das mit der Länge des Tastarms zunimmt, durch das über den Kippteller auf den Gelenkkopf einwirkende Gegenmoment begünstigt wird.

Die Erfindung wird anhand zweier Ausführungsbeispiele erläutert, die wenigstens schematisch aus der Zeichnung ersichtlich sind. In der Zeichnung zeigt:
Fig. 1 einen Längsschnitt durch ein erfindungsgemäßes Mehrkoordinaten-Tastmeßgerät, und
Fig. 2 einen Teillängsschnitt durch ein modifiziertes erfindungsgemäßes Mehrkoordinaten-Tastmeßgerät im Bereich der Lagerung des Gelenkkopfes.

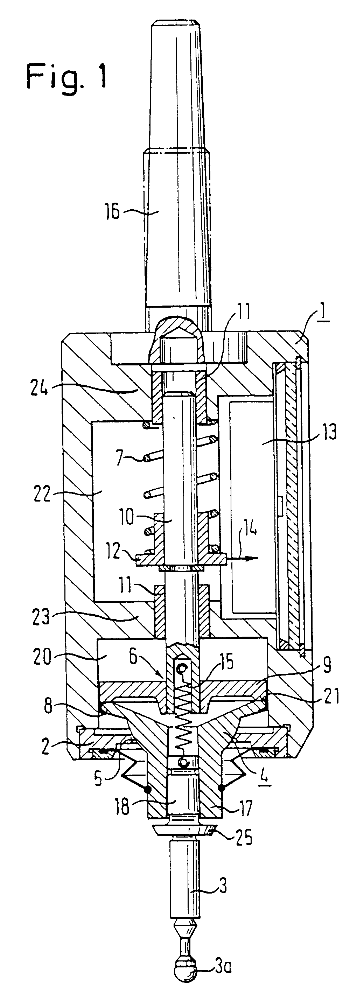

Das Mehrkomponenten-Tastmeßgerät nach Fig. 1 weist einen Tastarm 3 mit einer Tastkugel 3a am freien Ende auf, der in dem Gehäuse 1 an einem Schieber 6 abgestützt ist, dessen Verschiebungsgroße über ein Koppelelement 14 auf eine Meßuhr 13 übertragen und von dieser angezeigt wird.

Oben auf dem Gehäuse 1 ist ein zylindrischer oder vorzugsweise konischer Einspannschaft 16 zum Einspannen des Tastmeßgerätes in das Futter der Frässpindel ausgebildet. Im unteren Teil des Gehäuses 1 ist eine zylindrische Gehäusekammer 20 ausgebildet, in welcher der Tastarm 3 über einen als Kugelabschnitt ausgebildeten Gelenkkopf 4 in einem Ringsitz 5 gelagert ist, der in der stirnseitigen Gehäuseplatte 2 ausgebildet ist. Der Gelenkkopf 4 trägt an seiner dem Ringsitz 5 abgewandten Seite einen Kippteller 8, der mit seinem axial abstehenden Umfangsrand 21 axial an einem Stützteller 9 des Schiebers 6 anliegt. Der Kugelmittelpunkt des Gelenkkopfes 4 liegt in der den axialen Umfangsrand 21 des Kipptellers enthaltenden Ebene. Der Umfangsrand des Kipptellers 8 ist konvex abgerundet und entspricht in seinem größten Durchmesser bis auf ein kleines Führungsspiel dem Innendurchmesser der Gehäusekammer 20. Der schüsselförmige Kippteller 8 ragt über den Gelenkkopf 4 und damit den Ringsitz 5 allseits radial hinaus und ist an seinem radial vorstehenden Teil an der dem Ringsitz 5 zugewandten Unterseite kegelförmig ausgebildet. Das Verhältnis des Außendurchmessers des Kipptellers 8 zum Kugeldurchmesser des Gelenkkopfes 4 beträgt bei der dargestellten Ausführungsform etwa 1,4 und das Verhältnis des Durchmessers des Ringsitzes 5 zu dem Kugeldurchmesser des Gelenkkopfes 4 etwa 0,85.

Der Stützteller 9 des Schiebers 6 sitzt am unteren Ende eines Schieberschaftes 10, der durch die obere Begrenzungswand 23 der unteren Gehäusekammer 20 und die darüber befindliche obere Gehäusekammer 22 bis in deren obere Begrenzungswand 24 verläuft und in den Begrenzungswänden 23, 24 in Gleitlagern 11 geführt ist. Zwischen der oberen Begrenzungswand 24 und einem auf dem Schieberschaft 10 sitzenden Federteller 12 ist eine Rückstellfeder 7 eingespannt. Außerdem ist zwischen dem Schieber 6 und dem Gelenkkopf 4 eine Zugfeder 15 eingespannt. Der Federteller 12 bildet gleichzeitig das Kopplungselement 14 zur Meßuhr 13.

In der in Fig. 1 gezeigten Ausgangsstellung des Tastmeßgerätes befindet sich der Tastarm 3 in der Geräteachse und der axiale Umfangsrand des Kipptellers 8 liegt ringsum an dem unteren axialen Umfangsrand des Stütztellers 9 an. Soll daher eine axiale Bezugsfläche des Werkstücks angefahren werden, so erfolgt eine reine Axialverschiebung des Tastarms 3 zusammen mit dem Gelenkkopf 4, dem Kippteller 8 und dem Schieber 6 gegen die Kraft der Rückstellfeder 7, wobei der Kippteller 8 an der Wandung der Gehäusekammer 20 axial geführt wird. Beim Anfahren von seitlichen Bezugskanten des Werkstücks hingegen wird der Tastarm 3 um den Kugelmittelpunkt des Gelenkkopfes 4 geschwenkt, so daß der Kippteller 8 gegenüber dem Stützteller 9 des Schiebers 6 verkippt und daher den Schieber 6 gegen die Kraft der Rückstellfeder 7 und auch der Zugfeder 15 entsprechend verschiebt. Dabei entsteht unter der auf die Tastkugel 3a einwirkenden Kraft ein Drehmoment um die in der Wirkungsebene dieser Kraft liegende Stelle des Ringsitzes 5. Dadurch jedoch, daß der Kippteller 8 über den Ringsitz 5 radial hinausragt und daher die aktuelle Kippachse des Kipptellers 8, an der die Kraft der Rückstellfeder 7 und der Zugfeder 15 auf den Kippteller 8 und damit den Gelenkkopf 4 einwirkt, radial außen im Abstand von der nächstbenachbarten Stelle des Ringsitzes 5 liegt, entsteht ein dem erwähnten Drehmoment entgegenwirkendes Drehmoment. Daher bleibt der Gelenkkopf 4 mit unveränderter Lage seines Kugelmittelpunktes in seinem Ringsitz 5, so daß es nicht zu Axialverlagerungen des Gelenkkopfes und daher nicht zu Meßfehlern kommt.

An der unteren Seite des Gelenkkopfes 4 ist ein Konusfutter 17 ausgebildet, in welchem der Tastarm 3 über einen Konusschaft 18 auswechselbar festgelegt ist. Unter dem Konusschaft 18 ist an dem Tastarm 3 ein Auswerferflansch 25 ausgebildet, so daß der Tastarm 3 mittels eines Schlitzschraubendrehers, der in den Spalt zwischen dem Auswerferflansch 25 und dem Konusfutter 17 eingeführt wird, für sein Auswechseln ausgehebelt werden kann.

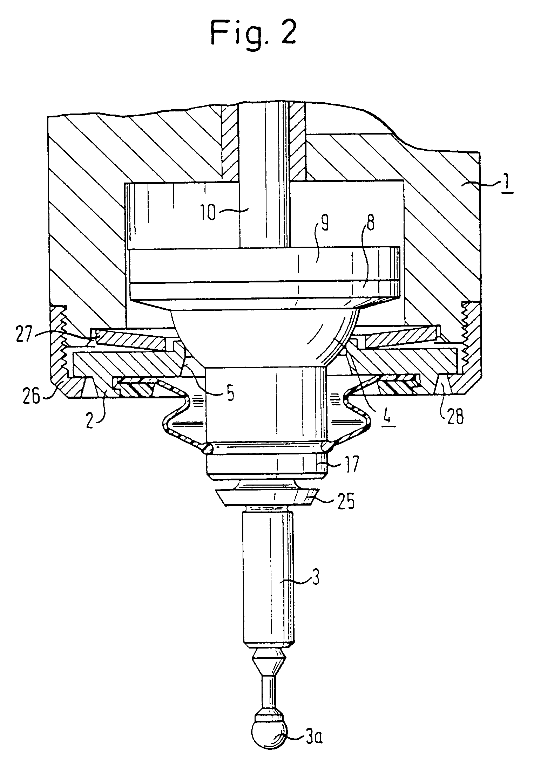

Die Ausführungsform nach Fig. 2 stimmt weitgehend mit der aus Fig. 1 überein. Nach Fig. 2 ist jedoch die Gehäuseplatte 2, in der der Ringsitz 5 für den Gelenkkopf 4 ausgebildet ist, mit Radialspiel in einem Gewindedruckring 26 gehalten, der mit dem Gehäuse 1 verschraubt ist. Zwischen der Gehäuseplatte 2 und dem Gehäuse 1 ist eine Tellerfeder 27 eingespannt. Außerdem ist zwischen dem Druckring 26 und der Gehäuseplatte 2 ein äußerer axialer Ringspalt 28 vorhanden. Daher kann die Gehäuseplatte 2 und somit der Ringsitz 5 mithilfe eines in den Ringspalt 28 eingeführten Werkzeuges, wie eines Schlitzschraubendrehers, radial verschoben werden, um eine mit einer Meßuhr an der Tastkugel 3a gemessene Exzentrizität derselben gegenüber der Achse des Tastmeßgerätes zu kompensieren. Die Federkraft der Tellerfeder 27 und daher der Reibschluß zwischen der Gehäuseplatte 2 und dem Druckring 26 für den normalen Gebrauch des Tastmeßgerätes können mit Hilfe des Druckringes 26 eingestellt werden.

## Patentansprüche

1. Mehrkoordinaten-Tastmeßgerät, mit einem Gehäuse (1), über das ein Tastarm (3) mit einer Tastkugel (3a) am freien Ende axial hinaussteht, der in dem Gehäuse (1) axial verschiebbar und an diesem über ein Kugelgelenk aus einem in einer Gehäuseplatte (2) ausgebildeten Ringsitz (5) und einem in diesem drehbar abgestützten, an dem Tastarm (3) ausgebildeten kugeligen Gelenkkopf (4) bis zu einem vorbestimmten Maximalwinkel allseits schwenkbar gelagert ist und auf dem in dem Gehäuse (1) ein gegen die Kraft einer Rückstellfeder (7) verschiebbarer Schieber (6) abgestützt ist, der mit einer die Verschiebegröße des Schiebers (6) anzeigenden Anzeigeeinrichtung (13) gekoppelt ist, wobei der Gelenkkopf (4) aus dem Ringsitz (5) durch die Axialverschiebung des Tastarms (3) aushebbar und als Kugelabschnitt ausgebildet ist, auf dem ein Kippteller (8) ausgebildet ist, der mit seinem kreisförmigen Umfangsrand an dem Schieber (6) kippbar axial abgestützt ist, der einen im Durchmesser mit dem Kippteller (8) übereinstimmenden Stützteller (9) aufweist, an dem der Kippteller (8) mit seinem axialen Umfangsrand in einer Ebene anliegt, die im Bereich des Krümmungsmittelpunktes des Gelenkkopfes (4) verläuft, dadurch gekennzeichnet, daß der Kippteller (8) über den Gelenkkopf (4) allseits radial hinausragt, daß der Stützteller (9) als Kreisscheibe ausgebildet ist, die in einer zylindrischen unteren Gehäusekammer (20), deren Durchmesser mit dem der Kreisscheibe übereinstimmt, an einem im Durchmesser kleineren Schieberschaft (10) sitzt, der durch die angrenzende Begrenzungswand (23) der unteren Gehäusekammer (20) und eine darüber befindliche obere Gehäusekammer (22) bis in deren obere Begrenzungswand (24) verläuft und in den Begrenzungswänden (23, 24) gleitend geführt ist.

2. Tastmeßgerät nach Anspruch 1, dadurch gekennzeichnet, daß der über den Gelenkkopf (4) radial hinaustehende Teil des Kipptellers (8) an der dem Ringsitz (5) zugewandten Seite kegelförmig ist.

3. Tastmeßgerät nach Anspruch 3, dadurch gekennzeichnet, daß der Schieberschaft (10) in Gleitlagern (11) geführt ist.

4. Tastmeßgerät nach einem der Ansprüche 1 bis 3, dadurch gekennzeichnet, daß zwischen dem Schieber (6) und dem Gelenkkopf (4) eine Zugfeder (15) eingespannt ist

5. Tastmeßgerät nach einem der Ansprüche 1 bis 4, dadurch gekennzeichnet, daß die den Ringsitz (5) aufnehmende Gehäuseplatte (2) über einen Druckring (26) und eine Tellerfeder (27) mit dem Gehäuse (1) verspannt ist und in dem Druckring (26) mit Umfangsspiel gehalten ist, und daß zwischen dem Druckring (26) und der Gehäuseplatte (2) ein äußerer Ringspalt (28) für den Eingriff eines Hebelwerkzeugs ausgebildet ist.

6. Tastmeßgerät nach einem der Ansprüche 1 bis 5, dadurch gekennzeichnet, daß an dem Gelenkkopf (4) an der dem Gehäuse (1) abgewandten Seite ein Konusfutter (17) ausgebildet ist, in welchem der Tastarm (3) über einen Konusschaft (18) auswechselbar festgelegt ist.

## Claims

1. A multiple coordinate feeler apparatus, comprising a housing (1), a feeler arm (3) axially projecting beyond the housing (1), the feeler arm having a feeler ball (3a) formed at the free end thereof and being axially displaceable in the housing (1) and being supported at the housing universally rotatable up to a predetermined maximum angle by a spherical joint of a ring seat (5) formed in a housing plate (2) and of a spherical joint head (4) formed at the feeler arm (3) and rotatably supported on the ring seat, a slide (6) being supported by the spherical joint head (4) and being guided for axial sliding movements in the housing (1) against the force of a return spring (7), the slide being coupled with an indicating means (13) indicating the sliding quantity of the slide (6), the joint head (4) being liftable out of the ring seat (5) by the axial displacement of the feeler arm and being formed as a spherical segment, on which a tilting plate (8) is formed which is tiltably axially supported by its circular peripheral edge at the slide (6) which comprises a supporting plate (9) corresponding in its diameter with the tilting plate (8), the tilting plate (8) abuting with its axial circumferential edge (21) against the supporting plate in a plane extending in the area of the center of curvature of the joint head (4), characterized in that the tilting plate (8) projects radially beyond the joint head (4) at all sides, that the supporting plate is formed as a circular disk which is fitted in a cylindrical lower housing chamber (20) on a slide shaft (10) of a smaller diameter, the diameter of the lower housing chamber corresponding with that of the circular disk, the slide shaft extending through the adjacent boundary wall (23) of the lower housing chamber (20) and through an upper housing chamber (22) being above it up to the upper boundary wall (24) thereof and being slidably guided in the boundary walls (23, 24).

2. Feeler apparatus according to claim 1, characterized in that the portion of the tilting disk (8) that radially projects beyond the joint head (4) is conically shaped at its side facing the ring seat (5).

3. Feeler apparatus according to claim 3, characterized in that the slide shaft (10) is guided in slidings (11).

4. Feeler apparatus according to any of claims 1 to 3, characterized in that a tension spring (15) is tensioned between the slide (6) and the joint head (4).

5. Feeler apparatus according to any of claims 1 to 4, characterized in that the housing plate (2) accomodating the ring seat (5) is clamped to the housing (1) by means of a pressure ring (26) and by a cup spring (27) and is held in the pressure ring (26) with circumferential clearances, and in that an outer annular gap (28) for the engagement of a lever tool is formed between the pressure ring (26) and the housing plate (2).

6. Feeler apparatus according to claim1, characterized in that a cone chuck (17) is formed at the joint head (4) at the side opposite to the housing (1), in which cone chuck the feeling arm (3) is interchangeably fixed by means of a cone shaft (18).

## Revendications

1. Palpeur de mesure de coordonnées multiples possédant un boîtier (1) duquel sort axialement un stylet de palpage (3) pourvu d'une bille de palpage (3a) à son extrémité libre, qui est monté coulissant axialement dans le boîtier (1) et est inclinable par rapport à celui-ci dans toutes les directions jusqu'à un angle maximum prédéterminé par l'intermédiaire d'une articulation sphérique formée d'un siège annulaire (5) formé dans une plaque de boîtier (2) et d'une tête d'articulation (4) sphérique formée sur le stylet de palpage (3), et s'appuie sur un coulisseau (6) coulissant dans le boîtier (1) contre la force d'un ressort de rappel (7), qui est couplé à un dispositif indicateur (13) indiquant la quantité dont coulisse le coulisseau (6), la tête d'articulation (4) pouvant être soulevée du siège annulaire (5) par coulissement axial du stylet de palpage (3) et se présentant sous la forme d'une portion de sphère sur laquelle est formée une assiette basculante (8) qui s'appuie axialement par basculement par son bord périphérique circulaire sur le coulisseau (6) qui présente une assiette d'appui (9) dont le diamètre correspond à celui de l'assiette basculante (8) et sur laquelle l'assiette basculante (8) s'applique par son bord périphérique axial dans un plan qui s'étend dans la zone du centre de courbure de la tête d'articulation (4), **caractérisé en ce que** l'assiette basculante (8) dépasse radialement de tous côtés de la tête d'articulation (4), en ce que l'assiette d'appui (9) a la forme d'un disque circulaire qui est monté, dans une chambre de boîtier inférieure cylindrique (20) dont le diamètre correspond à celui du disque circulaire, sur un arbre coulissant (10) de diamètre inférieur qui s'étend à travers la paroi voisine (23) délimitant la chambre de boîtier inférieure (20) et à travers une chambre de boîtier supérieure (22) située au-dessus jusque dans la paroi supérieure (24) délimitant cette dernière et est guidé à coulissement dans les parois de délimitation (23, 24).

2. Palpeur de mesure selon la revendication 1, **caractérisé en ce que** la partie de l'assiette basculante (8) dépassant radialement la tête d'articulation (4) est de forme conique du côté dirigé vers le siège annulaire (5).

3. Palpeur de mesure selon la revendication 2, **caractérisé en ce que** l'arbre coulissant (10) est guidé dans des paliers lisses (11).

4. Palpeur de mesure selon l'une quelconque des revendications 1 à 3, **caractérisé en ce qu'**un ressort de traction (15) est tendu entre le coulisseau (6) et la tête d'articulation (4).

5. Palpeur de mesure selon l'une quelconque des revendications 1 à 4, **caractérisé en ce que** la plaque de boîtier (2) recevant le siège annulaire (5) est serrée sur le boitier par l'intermédiaire d'un anneau de compression (26) et d'une rondelle conique (27) et est maintenue dans l'anneau de compression (26) avec un jeu périphérique et en ce qu'une gorge annulaire (28) destinée à l'introduction d'un levier est formée entre l'anneau de compression (26) et la plaque de boîtier (2).

6. Palpeur de mesure selon l'une quelconque des revendications 1 à 5, **caractérisé en ce qu'**un logement conique (17) est formé sur la tête d'articulation (4) du côté opposé au boîtier (1), dans lequel le stylet de palpage (3) est fixé de façon amovible au moyen d'un arbre conique (18).
